# EUROPEAN PATENT APPLICATION

(11) **EP 2 267 378 A2**
(43) Date of publication of application: **29.12.2010**
(21) Application number: 10380085.0
(22) Date of filing: 22.06.2010
(51) Int. Cl.: F24J 2/52, E04D 13/18

(54) **Device for fixing installations to waterproofed covers**

(30) Priority: 24.06.2009 ES 200901043 U; 08.06.2010 ES 201030593 U
(71) Applicant: Acieroid S.A., Barcelona (ES)
(72) Inventor: Moreno Escofet, Carles, 08908 L'Hospitalet de Llobregat (Barcelona) (ES)
(74) Representative: Espiell Volart, Eduardo Maria

(57) **Abstract**

The device comprises: a profile (1) made of hot-melt material having a longitudinal housing (13), the bottom of which extends into coplanar flaps (11) for thermowelding fixing to the waterproofing sheet (L) of the cover (C), and a metal tubular core (2), tightly disposed in the interior of the aforementioned longitudinal housing (13) of the profile (1) made of hot-melt material, said housing (13) containing the metal tubular core (2) forming an area for the assembly and fixation of an installation without the screws (T) or fixing elements affecting the waterproofing (L) of the cover. In one embodiment, the metal tubular core (2) has orifices for assembling the screws (3) for fixation to the cover, said device having waterproofing elements to prevent the passage of water into the cover (C).

## Description

### OBJECT OF THE INVENTION

The present invention relates to a device for fixing installations to waterproofed covers, both for roofs and façades, and preferably to "Deck" type covers having an external hot-melt waterproofing sheet.

### FIELD OF APPLICATION OF THE INVENTION

This device is applicable to the fixation of installations and other elements, such as external cladding, to waterproofed covers, both for roofs and façades.

### BACKGROUND OF THE INVENTION

In industrial facilities, sports centers, shopping centers and other similar buildings, the use of "Deck" type covers or very slightly sloped covers, for example between 1% and 5%, is common, due to their qualities in terms of protection, insulation, easy assembly and maintenance which make them especially suitable.

These "Deck" covers are non-transitable and consist of a metal plate, thermal and acoustic insulation, mainly consisting of rigid rock wool panels and covered by a self-protected waterproofing sheet made of hot-melt material.

Additionally, the assembly of different installations on a cover, such as solar installations, whether of thermal plates or photovoltaic plates, is frequently envisaged for the purpose of optimizing the use of the cover surface and fulfilling regulatory construction rules, with the objective of reducing energy consumption.

However, fixation of these solar installations to "Deck" type covers by means of screws is not recommended, as it would cause perforation of the waterproofing sheet, with the consequent appearance of damp and the formation of water leaks and humidity in the rock wool insulation, with the ensuing increase in the weight of the cover and risk of collapsing.

These non-transitable "Deck" covers generally consist of thermal and acoustic insulation, mainly consisting of rigid rock wool panels and a metal plate, covered by a self-protected waterproofing sheet made of hot-melt material.

Fixation of different installations to these covers, such as solar installations, thermal plates or photovoltaic plates, requires preservation of the watertightness of the waterproofing sheet to prevent the appearance of damp and the formation of water leaks and humidity in the rock wool insulation, with the ensuing increase in the weight of the cover and risk of collapsing.

Therefore, the problem posed is the development of a fixing device that will allow assembly on covers having an external waterproofing sheet, such as "Deck" type covers of solar installations or any other kind, without damaging the aforementioned external waterproofing sheet or negatively affecting its watertightness.

### DESCRIPTION OF THE INVENTION

The device for fixing installations to waterproofed covers that is the object of this invention has technical peculiarities destined for allowing stable fixation of different installations, for example solar installations, to a cover having an external waterproofing sheet made of hot-melt material, such as a "Deck" type cover, without damaging the waterproofing of the cover.

According to the invention, the fixing device comprises: a profile made of hot-melt material having a longitudinal housing that extends along the bottom into coplanar flaps for fixation thereof to the waterproofing sheet of the cover, and a metal tubular core, tightly disposed in the interior of the aforementioned longitudinal housing of the profile made of hot-melt material, the aforementioned housing containing the metal tubular core forming an area suitable for assembling and fixing the solar installation without the screws or fixing elements directly perforating the waterproofing sheet of the cover.

Other objectives of the invention are:
- to increase the bearing surface of the metal core on the cover, achieving greater load distribution,
- to reduce the impact of the wind on the solar plates installed on the device, thereby considerably reducing the stress transmitted to the fixing device and therefore to the cover, and
- to increase the watertightness of the fixation to the cover when the metal core is fixed thereto by means of screws that pass through the waterproofing sheet of the cover.

In one embodiment, the hot-melt material of the profile is polypropylene, due to which it can be fixed directly to the waterproofing sheet of the cover by application of heat, for example with a blowtorch, avoiding perforation thereof. In one example of embodiment, the metal tubular core inserted in the longitudinal housing of the profile consists of a galvanized steel tube, providing an adequate support for coupling self-boring screws wherewith the plate and profiles of the solar installation are coupled.

The longitudinal layout of the metal tubular core in the interior of the profile made of hot-melt material determines that the weight of the installations assembled on the fixing device will be distributed over a wide area of the cover, rather than transmitted to said cover on specific occasions.

These fixing devices are disposed on the cover in such a manner that they are spaced approximately so that the solar installation is coupled thereto and not to the insulation of the cover. Additionally, their optimal layout must prevent the accumulation of rain water, due to which they are best oriented in the direction of the maximum slope angle of the cover, taking into account the orientation of the plates of the aforementioned solar installation.

In one embodiment, the profile has an omega-shaped cross-section with a lower opening for introducing the tubular core inside a housing. Additionally, the profile also has a flat upper face parallel to the plane defined by the flaps and having two sloping faces on either side, forming an open angle for lateral anchoring.

In those cases where wind pressure and its effect on the cover so requires, the metal tubular core may be mechanically fixed to the cover by means of a screw that will pass through the waterproofing and insulation, on specific occasions and according to the corresponding calculation. Once the tube has been fixed to the cover it will be sheathed with the polypropylene profile via the lower opening, in order to cover it while maintaining the watertightness of the cover at the point of fixation of the screw.

The tubular core has also been envisaged to have a quadrangular cross-section, conferring greater inertia thereto and resistance to the lateral stress transmitted by the solar installation.

In one variant of embodiment of the invention, the tubular core has a trapezoidal cross-section appropriate to the housing of the profile made of hot-melt material and defined by: a flat upper surface; two sloping sides, downwardly divergent, having the same number of longitudinal recesses at the lower ends; and a lower surface that rests on the cover having a longitudinal adzing centrally disposed thereon and recessed with respect to said lower surface, and longitudinal drainage channels defined internally and disposed on the opposite sides of the aforementioned longitudinal adzing.

The metal tubular core has, on its upper surface, an orifice for the pass-through assembly of a screw for fixation to the cover, which passes through a second orifice defined on the upper surface of the longitudinal adzing of the lower surface, whereupon the head of the screw acts upon said longitudinal adzing by means of an elastic washer disposed between the head of the screw and the aforementioned upper surface of the longitudinal adzing.

In the event that rain water were to access the interior of the metal tubular core through one of the open ends thereof, the water would circulate along the longitudinal drainage channels, hampering access thereof to the second aforementioned orifice defined in the upper surface of the longitudinal adzing, which remains in a raised position with respect to the lower surface of the metal tubular core.

Additionally, the joint interposed between the head of the fixing screw and the upper surface of the recessed longitudinal adzing prevents water or humidity from entering therethrough towards the cover.

In one embodiment of the invention, the device also comprises an elastic joint disposed in the interior of the longitudinal adzing recessed with respect to the lower surface of the metal tubular core, said elastic joint having an orifice for the tight passage of the corresponding screw for fixation to the cover.

By tightening the aforementioned fixing screw, the elastic joint is tightened against the waterproofing sheet of the cover, preventing water or humidity from entering through the screw passage orifice.

The device of the invention additionally comprises a metal bridge by way of an inverted U-shape, having a waterproof membrane on its lower side and disposed on the upper part of the hot-melt profile for covering, at least, those areas corresponding to the orifices defined on the upper surface of the metal tubular core, preventing water from accessing the interior of the metal core through said orifice towards the interior of the metal core.

The aforementioned elements guarantee total watertightness of the passage orifices of the screw for fixation of the metal core to the cover and, consequently, the passage of water towards the interior of the cover.

In one variant of embodiment, the profile made of hot-melt material internally comprises longitudinal projections for interlocking into the longitudinal recesses defined on the sloping sides of the metal tubular core.

In one embodiment of the invention, the profile made of hot-melt material that covers the metal tubular core has been envisaged to consist of a bituminous material, the side flaps of which are fixed to the waterproofing sheet of the cover by application of heat. This constitution of the profile made of hot-melt material is especially recommended in those cases where the waterproofing sheet of the cover is also formed from a bituminous material, providing, in this case correct fixation between the profile made of hot-melt material and the waterproofing sheet.

In accordance with the invention, this device comprises poles fixed to the upper surface of the profile made of hot-melt material, for supporting perforated vertical plates that form a windbreak barrier around the solar plates assembled on the device for fixation thereof to the cover.

This windbreak barrier minimizes the effect of the wind on the solar plates and consequently the overloads, caused by wind gusts, transmitted to the device for fixation thereof to the cover.

### DESCRIPTON OF THE FIGURES

For the purpose of complementing this description and helping to better understand the characteristics of the invention, a set of drawings accompanies this specification wherein the following has been represented in an illustrative and nonlimiting manner:

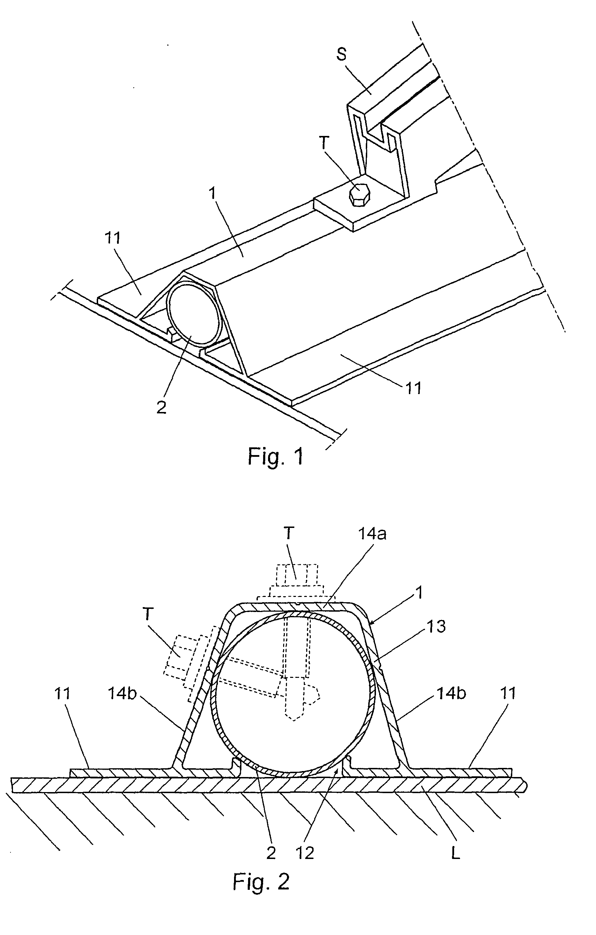

- Fig. 1: shows a detailed view of a practical embodiment of the fixing device;
- Fig. 2: shows a cross-sectional view of the fixing device:
- Fig. 3: shows a cross-sectional view of the separated profile and tubular core;
- Fig. 4: shows a cross-sectional view of the fixing device with the rectangular- shaped tubular core;
- Fig. 5: shows a cross-sectional view of an embodiment of the device with the tubular core fixed to the cover by means of a screw;
- Fig. 6: shows an exploded elevational view of a variant of embodiment of the device of the invention;
- Fig. 7: shows an elevational view of the device of the preceding figure, applied to a cover;
- Fig. 8: shows a variant of embodiment of the device of figure 6 with the waterproofing sheet fixed to a cover without screws; and
- Fig. 9: shows a partial perspective view of an example of embodiment of the device of the preceding figure, having a windbreak barrier disposed around the solar plates assembled on the device for fixation thereof to the cover.

### PREFERRED EMBODIMENT OF THE INVENTION

In the example shown, the fixing device comprises a profile (1) made of hot-melt plastic material destined for fixation to the waterproofing sheet (L) of the cover (C) by application of heat, said profile (1) having a metal tubular core (2) which forms an adequate area for fixing the screws (T) of the installation to be assembled, for example a solar installation (S).

In the example shown, the profile (2) has a longitudinal housing (13) wherein the tubular core (2) is disposed, said profile (1) extending along the lower lateral area into two flat, coplanar flaps (11) destined for fixing to the waterproofing sheet (L) of the cover by application of heat.

The housing (13) has a lower opening (12) between the flaps (11) for the lateral introduction of the metal tubular core (2), although the possibility that the aforementioned housing (13) can have a closed contour, housing the tubular core (2) therein, cannot be ruled out.

The profile (1) has, externally and in correspondence to the housing (13), an upper face (14a) and two lateral faces (14b) for supporting and coupling the solar installations (S) and the introduction of screws (T) that are fixed to the tubular core (2) without damaging the waterproofing sheet of the cover.

In the example shown, the upper face (14a) is substantially parallel to the flaps (11), while the two lateral faces (14b) are inclined in an oblique direction.

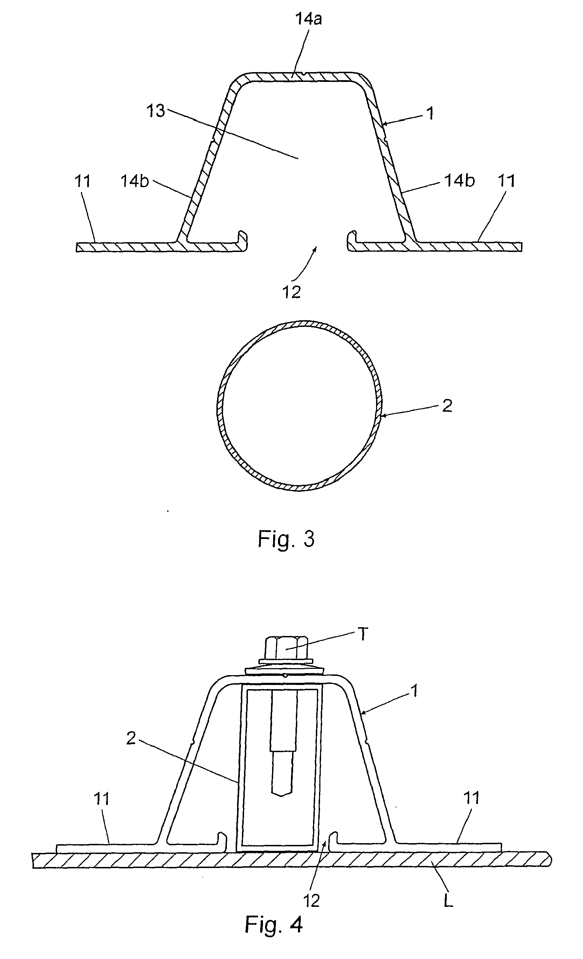

Figure 4 shows an alternative embodiment wherein the tubular core (2) used has a quadrangular cross-section, in this case rectangular, to give the device greater inertia against the stress transmitted by the solar installation (S).

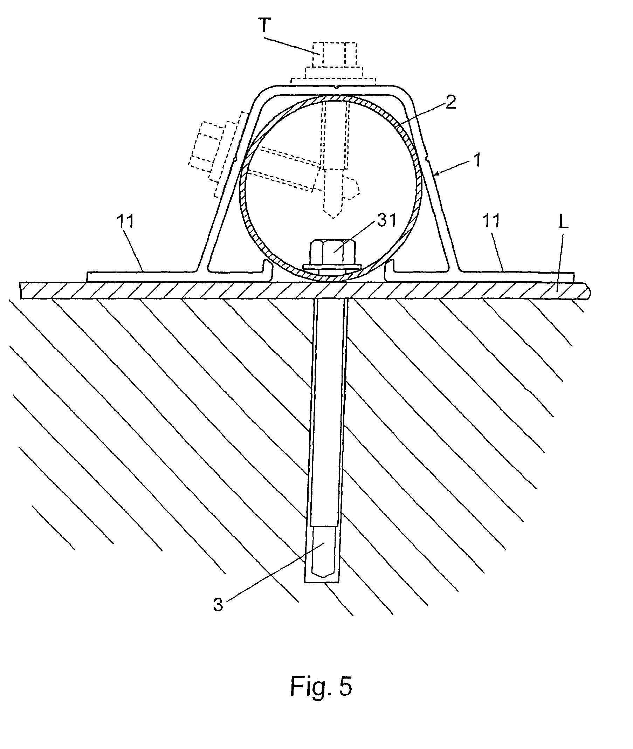

Figure 5 shows a specific alternative embodiment wherein the tubular core (2) is directly screwed onto the cover by means of a screw (3), perforating the insulating sheet (L) and becoming anchored to the lower insulation. The position of the screw (3) for fixation to the cover in an area protected by the outer profile (1) and by the profile (1) flap joints welded to the waterproofing sheet of the cover prevents the position of said screw from affecting the watertightness of the cover.

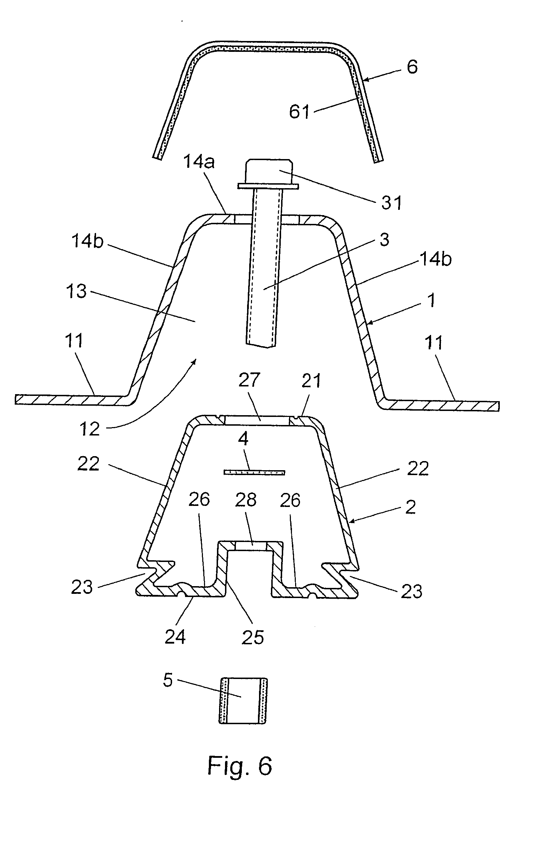

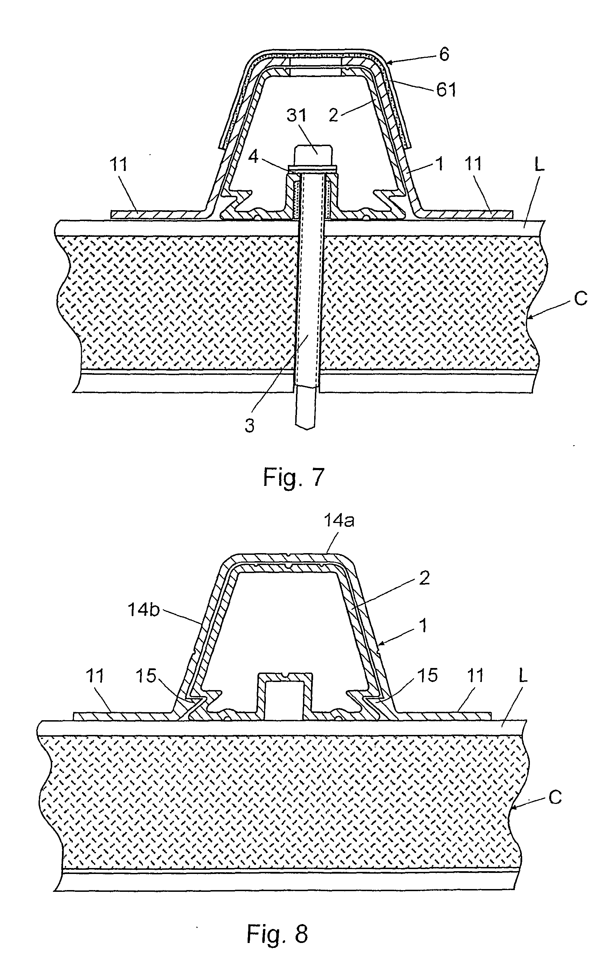

In the variant of embodiment shown in figures 6 and 7, the profile (1) made of hot-melt material has an omega-shaped cross-section wherein the metal tubular core (2) is tightly housed, which in this example of embodiment has a trapezoidal cross-section appropriate to the housing (3) of the profile (1) and defined by: a flat upper surface (21); two sloping sides (22), divergent towards the lower area, having the same number of longitudinal recesses (23) at the lower ends; and a lower bearing surface (24) having a centrally recessed longitudinal adzing (25) and longitudinal drainage channels (26) internally defined and disposed on the opposite sides of the aforementioned longitudinal adzing (25).

The metal tubular core (2) has, on its upper surface, an orifice (27) for the pass-through assembly of the screw (3) for fixation to the cover (C), which passes through a second orifice (28) defined on the upper surface of the longitudinal adzing (25) and which establishes the fixation of the tubular core (2) to the cover (C).

As can be observed in figure 7, in the assembly position the head (31) acts against the longitudinal adzing (26) by means of an interposed elastic washer (4) which guarantees the watertightness of the assembly.

In said embodiment, the device comprises an elastic joint (5) disposed in the interior of the longitudinal adzing (25) to guarantee watertightness around the orifice defined on the waterproofing sheet (L) of the cover (C) for passage of the fixing screw (3).

On the upper face (14a), the hot-melt profile (1) is disposed on a metal bridge (6) by way of an inverted U-shape, having a waterproof membrane (61) for covering and obstructing the orifice (27) defined on the upper surface of the metal tubular core (2).

In this embodiment, the profile (1) is formed from a self-protected bituminous material.

Figure 8 shows a variant of embodiment wherein the profile (1) is made of polypropylene and has internal longitudinal projections (15) for interlocking into the longitudinal recesses (23) defined on the sloping sides of the tubular core (2).

In this specific embodiment the profile (1) is fixed to the waterproofing sheet (L) of the cover (C) by means of lateral flaps (11) and by application of heat.

In the event that the device is installed in areas with considerable load potential due to the action of the wind on the plates (P) of a solar installation (S) installed thereon, the device shown in figures 6 and 7 which includes additional fixation to the cover (C) by means of screws would preferably be used.

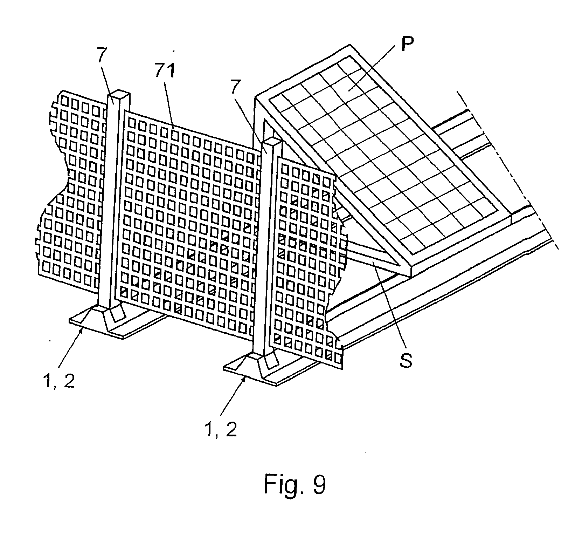

In this case and in order to minimize the effect of the wind against the solar plates, the device comprises, as can be observed in figure 9, poles (7) fixed to the upper surface of the profile (1) for supporting perforated vertical plates (71) that form a windbreak barrier around the assembled plates or solar plate arrays (P), by means of an adequate substructure or installation (S), on the fixing device.

## Claims

1. Device for fixing installations on waterproofed covers, and preferably on "Deck" type covers having an outer hot-melt waterproofing sheet (L), **characterized in that** it comprises: a profile (1) made of hot-melt material, having a longitudinal housing (13) the bottom of which extends into coplanar flaps (11) for thermowelding fixing thereof to the waterproofing sheet (L) of the cover (C), and a metal tubular core (2), tightly disposed in the interior of the aforementioned longitudinal housing (13) of the profile (1) made of hot-melt material, the aforementioned housing (13) containing the metal tubular core (2) forming an area for the assembly and fixation of an installation without the screws (T) or fixing elements affecting the waterproofing (L) of the cover.

2. Fixation, according to claim 1, **characterized in that** the hot-melt material that forms the profile (1) is made of polypropylene.

3. Device, according to any of the preceding claims, **characterized in that** the profile (1) has an omega-shaped cross-section, having a lower opening (12) for the lateral introduction of the metal tubular core (2) in the housing (13), even for covering the tubular core (2) subsequent to fixing it to a support, if deemed necessary.

4. Device, according to claim 3, **characterized in that** the profile (1) has, externally and in correspondence with the housing (13), an upper face (14a) that is flat and parallel to the plane defined by the flaps (11) and, on either side, two sloping faces (14b).

5. Device, according to any of the preceding claims, **characterized in that** the tubular core (2) has a quadrangular cross-section.

6. Device, according to claim 1, **characterized in that** the tubular core (2) has a trapezoidal cross-section, appropriate to the housing of the profile (1) made of hot-melt material and defined by: a flat upper surface (21); two sides (22), sloping and divergent towards the lower area, having the same number of longitudinal recesses (23) at the lower ends; and a lower bearing surface (24) having a central longitudinal adzing (25) recessed with respect to said lower surface (24) and longitudinal drainage channels (26) internally defined and disposed on the sides of the aforementioned longitudinal adzing (25).

7. Device, according to claim 6, **characterized in that** the tubular core (2) has, on its upper surface (21), an orifice (27) for the pass-through assembly of a screw (3) for fixation to the cover (C), which passes through a second orifice (28) defined on the upper surface of the longitudinal adzing (25), the head (31) of which acts upon said longitudinal adzing (25) by means of an elastic washer (4) disposed between the head (31) of the screw and the aforementioned longitudinal adzing (25).

8. Device, according to claim 7, **characterized in that** it comprises, in the interior or the longitudinal adzing (25) of the tubular core (2), an elastic joint (5) having an orifice for the tight passage of the corresponding screw (3) for fixation to the cover (C).

9. Device, according to any of claims 7 and 8, **characterized in that** it comprises a metal bridge (6) by way of an inverted U-shape, having a waterproof membrane (62) on its lower side and disposed on the upper part of the profile (1) for covering, at least, those areas corresponding to the orifices (27) defined on the upper surface of the tubular core (2).

10. Device, according to claim 6, **characterized in that** the profile (1) made of hot-melt material internally comprises longitudinal projections (14) for interlocking thereof into the longitudinal recesses (23) defined on the sloping sides (22) of the tubular core (2).

11. Device, according to claim 1, **characterized in that** the profile (1) made of hot-melt material consists of a bituminous material.

12. Device, according to any of the preceding claims, **characterized in that** it comprises poles (7) fixed to the upper surface of the profile (1) made of hot-melt material for supporting perforated vertical plates (71) that form a windbreak barrier around an installation of solar plates (P) assembled on the device for fixation to the cover (C).
